# EUROPÄISCHE PATENTSCHRIFT

(11) **EP 2 783 448 B1**
(45) Veröffentlichungstag und Bekanntmachung des Hinweises auf die Patenterteilung: **09.01.2019**
(21) Anmeldenummer: 12787680.3
(22) Anmeldetag: 07.11.2012
(51) Int. Cl.: H02J 5/00, H02J 7/00, H02J 7/02

(54) **LADEVORRICHTUNG FUER HANDWERKZEUGAKKUS**
CHARGING DEVICE FOR HANDHELD POWER TOOL BATTERIES
DISPOSITIF DE CHARGE POUR UNE BATTERIE D'UNE MACHINE-OUTIL A MAIN

(30) Priorität: 22.11.2011 DE 102011086826
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE); AMANN, Volker, 86153 Augsburg (DE); LOHR, Guenter, 70771 Leinfelden-Echterdingen (DE); MACK, Juergen, 73035 Goeppingen (DE); DIETZEL, Friederike, 70469 Stuttgart (DE)
(86) Internationale Anmeldenummer: PCT/EP2012/072001
(87) Internationale Veröffentlichungsnummer: WO 2013/075942

(56) Entgegenhaltungen:
- DE-A1- 10 347 945
- DE-A1-102004 039 651
- DE-A1-102007 057 552
- DE-A1-102008 005 082
- DE-A1-102009 029 411
- DE-U1-202005 002 311
- US-A1- 2005 021 100
- US-A1- 2007 069 684
- US-A1- 2008 211 458
- US-A1- 2009 146 608
- US-A1- 2010 201 513
- US-A1- 2010 327 803
- US-B1- 7 462 951

## Beschreibung

### Stand der Technik

Es ist bereits ein System mit zumindest einem Handwerkzeugakku und zumindest einer Handwerkzeugakkuladevorrichtung, die zumindest einen Akkuaufnahmebereich aufweist, der zumindest den Handwerkzeugakku bei einem induktiven Ladevorgang aufnimmt, vorgeschlagen worden.

Der nächstliegende Stand der Technik US 2008/0211458 offenbart allgemein ein Ladegerät, das induktiv arbeitet. Tragbare elektrische Geräte, etwa Mobiltelefone oder auch elektrische Zahnbürsten und Rasierapparate, die man auf das Ladegerät legt, werden drahtlos aufgeladen. Die Oberfläche des Ladegeräts ist als Display ausgestaltet, das Informationen über den Ladevorgang, etwa eine Fortschrittsanzeige zeigt.

Ein Handwerkzeug in Form einer Bohrmaschine ist in DE 10 2009 029 411 offenbart. Die Maschine wird von einem Akku mit Strom versorgt, der mit einer geeigneten Ladestation drahtlos gespeist wird.

US 7,462,951 beschreibt eine Vorrichtung, mit der Akku-Packs für Werkzeug drahtlos geladen werden. Ein Display gibt Auskunft darüber, ob das Gerät induktiv Strom bezieht.

Die DE 20 2005 002 311 U offenbart eine Basisstation für elektrische Zahnbürsten.

Die Grundidee, den Benutzer einer induktiven Ladestation über Hinweise auf einem Display zur optimalen Ladeposition zu führen, ist aus der US 2009 / 0 146 608, der US 2010 / 0 201 513, der DE 10 2004 039 651 oder auch der US 2005 / 0 021 100 bekannt.

### Offenbarung der Erfindung

Die Erfindung wird durch Anspruch 1 definiert. Die abhängigen Ansprüche sind auf bevorzugte Ausführungsbeispiele gerichtet.

Die Erfindung geht aus von einem System mit zumindest einem Handwerkzeugakku und zumindest einer Handwerkzeugakkuladevorrichtung, die zumindest einen Akkuaufnahmebereich aufweist, der zumindest den Handwerkzeugakku bei einem induktiven Ladevorgang aufnimmt.

Es wird vorgeschlagen, dass das System zumindest eine Bedienerschnittstelle aufweist, die dazu vorgesehen ist, zumindest eine Information des Ladevorgangs auszugeben.

Unter einem "Handwerkzeugakku" soll insbesondere ein Akku verstanden werden, der dazu vorgesehen ist, ein Handwerkzeug mit einer Energie zu versorgen. Vorzugsweise ist der Handwerkzeugakku zumindest bei einem Betrieb insbesondere werkzeuglos lösbar mit dem Handwerkzeug verbunden.

Alternativ oder zusätzlich könnte ein Handwerkzeugakku in das Handwerkzeug integriert sein. Insbesondere stellt der Handwerkzeugakku in zumindest einem Betriebszustand wenigstens 5 Watt, vorzugsweise wenigstens 25 Watt, besonders bevorzugt wenigstens 100 Watt, bereit. Insbesondere stellt der Handwerkzeugakku in einem aufgeladenen Zustand wenigstens 2,5 Wattstunden, besonders vorteilhaft wenigstens 5 Wattstunden, besonders vorteilhaft wenigstens 10 Wattstunden, zur Verfügung. Insbesondere soll unter einem "Handwerkzeug" ein, dem Fachmann als sinnvoll erscheinendes tragbares Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug, verstanden werden. Insbesondere soll unter einer "Handwerkzeugakkuladevorrichtung" eine Vorrichtung verstanden werden, die bei einem Ladevorgang eine Ladeenergie an den Handwerkzeugakku überträgt.

Vorteilhaft weist das System mehrere Handwerkzeugakkuladevorrichtungen auf. Vorzugsweise befestigt, besonders bevorzugt positioniert die Handwerkzeugakkuladevorrichtung den Handwerkzeugakku direkt oder besonders bevorzugt indirekt über einen Handwerkzeugkoffer.

Vorzugsweise weist die Handwerkzeugakkuladevorrichtung eine Ladeelektronik auf. Unter einer "Ladeelektronik" soll insbesondere eine Elektronik verstanden werden, die von einem Ladezustand des Handwerkzeugakkus abhängig eine Energieübertragung an den Handwerkzeugakku steuert und/oder vorzugsweise regelt. Vorzugsweise fordert der Handwerkzeugakku von der Ladeelektronik eine Ladeleistung an. Unter einem "Akkuaufnahmebereich" soll insbesondere ein Bereich verstanden werden, in dem der Handwerkzeugakku zumindest bei einem Ladevorgang angeordnet ist.

Vorzugsweise befestigt und/oder positioniert die Handwerkzeugakkuladevorrichtung den Handwerkzeugakku bei einem Ladevorgang direkt oder vorteilhaft indirekt in dem Akkuaufnahmebereich. Alternativ oder zusätzlich könnte die Handwerkzeugakkuladevorrichtung eine Anzeige, eine Form, ein Befestigungsmittel und/oder vorzugsweise eine Markierung aufweisen, die den Akkuaufnahmebereich festlegt.

Insbesondere soll unter einem "induktiven Ladevorgang" ein Vorgang verstanden werden, bei dem die Handwerkzeugakkuladevorrichtung den Handwerkzeugakku mittels einer durch magnetische Felder von der Handwerkzeugakkuladevorrichtung auf den Handwerkzeugakku übertragenen Ladeenergie auflädt. Insbesondere weisen die Handwerkzeugakkuladevorrichtung und der Handwerkzeugakku dabei keine elektrisch leitende, eine Ladeenergie übertragende Verbindung auf.

Unter einer "Bedienerschnittstelle" soll insbesondere eine Einheit verstanden werden, die dazu vorgesehen ist, eine Information an einen Bediener akustisch, haptisch und/oder vorteilhaft optisch auszugeben.

Vorzugsweise weist die Bedienerschnittstelle zumindest ein Leuchtmittel, bevorzugt wenigstens eine Leuchtdiode, besonders bevorzugt ein Display, zur Anzeige der Information auf. Vorteilhaft weist die Bedienerschnittstelle zumindest ein Eingabemittel zur Aufnahme einer Bedienereingabe auf. Vorteilhaft ist die Bedienerschnittstelle dazu vorgesehen, eine Information einer Position des Handwerkzeugakkus, einen Ladezustand des Handwerkzeugakkus, eine Information einer Temperatur des Handwerkzeugakkus oder der Handwerkzeugakkuladevorrichtung, Störungen, einen Wirkungsgrad des Ladevorgangs, eine Außentemperatur, ein Alter, eine Kapazität, einen Typ des Handwerkzeugakkus und/oder eine Nutzungsinformation des Handwerkzeugakkus auszugeben.

Vorzugsweise ist die Bedienerschnittstelle dazu vorgesehen, eine Bedienereingabe zur Auswahl einer Ladekurve aufzunehmen, insbesondere für eine Schnellladung, eine Ladung mit größtmöglicher Kapazität, eine Ladung für eine maximale Lebensdauer und/oder eine Priorisierung einer Ladung eines Handwerkzeugakkus in einer der mehreren Handwerkzeugakkuladevorrichtung.

Vorzugsweise ist die Bedienerschnittstelle als eine eigenständige Baugruppe, als eine in die Handwerkzeugakkuladevorrichtung integrierte Baugruppe und/oder als eine zumindest teilweise in einen Bordcomputer eines Kraftfahrzeugs, ein Mobiltelefon und/oder einen Computer integrierte Baugruppe bzw. Software ausgebildet. Vorteilhaft könnte die Bedienerschnittstelle in den Handwerkzeugakku des Systems integriert sein. Dadurch könnten Informationen wie eine Anzahl von Ladezyklen, eine altersabhängige Kapazität, ein Produktionsdatum, ein Datum einer Erstverwendung, eine Anzeige eines Ladezustands und eine Positionierung in dem Akkuaufnahmebereich von der Handwerkzeugakkuladevorrichtung unabhängig angezeigt werden.

Vorzugsweise soll unter einer "Information einer Position des Handwerkzeugakkus" zumindest eine Information verstanden werden, die aussagt, ob eine induktive Ladung des Handwerkzeugakkus in der aktuellen Position relativ zu der Handwerkzeugakkuladevorrichtung insbesondere mit wenigstens einem bestimmten Wirkungsgrad möglich ist. Unter "vorgesehen" soll insbesondere speziell programmiert, ausgelegt und/oder ausgestattet verstanden werden. Insbesondere soll unter einer "Information des Ladevorgangs" zumindest eine Information über eine Kenngröße verstanden werden, die den Ladevorgang beeinflusst und/oder die sich bei einem Ladevorgang verändert.

Vorzugsweise ist die Information des Ladevorgangs eine, dem Fachmann als sinnvoll erscheinende Information, vorzugsweise jedoch eine Information, wie viel Energie der Handwerkzeugakku speichert und/oder eine Information über eine Qualität einer induktiven Übertragung. Vorzugsweise ist die Bedienerschnittstelle dazu vorgesehen, mehrere insbesondere unterschiedliche Informationen von einem oder vorteilhaft mehreren Handwerkzeugakkus auszugeben.

Durch die erfindungsgemäße Ausgestaltung des Systems kann der Bediener nach einem Einbringen des Handwerkzeugakkus in den Akkuaufnahmebereich vorteilhaft überprüfen, ob der Handwerkzeugakku in einer zur induktiven Ladung des Handwerkzeugakkus kompatiblen Position angeordnet ist.

In einer weiteren Ausgestaltung wird vorgeschlagen, dass das System eine erste Energieversorgungseinheit und eine zweite Energieversorgungseinheit aufweist, wodurch bei einem Ausfall, einer Nichtverfügbarkeit und/oder einem Abschalten einer Energieversorgung der ersten Energieversorgungseinheit auf eine Energieversorgung der zweiten Energieversorgungseinheit zurückgegriffen werden kann. Insbesondere kann bei einem Ausfall, einer Nichtverfügbarkeit und einem Abschalten einer Energieversorgung ein Energieverbrauch minimiert werden, insbesondere indem dann nur ein Teil der Funktionen des Systems zur Verfügung steht.

Vorzugsweise weist die Handwerkzeugakkuladevorrichtung zumindest eine der Energieversorgungseinheiten, vorteilhaft beide Energieversorgungseinheiten, auf. Alternativ könnte die Bedienerschnittstelle zumindest eine der Energieversorgungseinheiten, vorteilhaft beide Energieversorgungseinheiten, aufweisen. In einer weiteren Alternative könnte eine Energieversorgungsvorrichtung des Systems, die insbesondere als eigene Baugruppe ausgebildet ist, zumindest eine der Energieversorgungseinheiten aufweisen.

Insbesondere soll unter einer "Energieversorgungseinheit" eine Einheit verstanden werden, die dazu vorgesehen ist, eine Energie, die insbesondere von einer Energieversorgung kommt, für eine Funktion zur Verfügung zu stellen. Bevorzugt ist die Funktion von einer Speicherung von Informationen verschieden. Vorzugsweise stellen die Energieversorgungseinheiten in zumindest einem Betriebszustand Energie für unterschiedliche Funktionen bereit. Vorteilhaft stellt die erste Energieversorgungseinheit eine Energie zumindest für die Bedienerschnittstelle bereit.

Vorzugsweise stellt nur die zweite Energieversorgungseinheit eine Energie zur Ladung des Handwerkzeugakkus bereit. Insbesondere weisen die Energieversorgungseinheiten jeweils einen eigenen Energieeingang auf, der insbesondere jeweils mit einer eigenen Energieversorgung verbunden ist. Alternativ könnten die Energieversorgungseinheiten einen gemeinsamen Energieeingang und nach dem Energieeingang getrennte Energiepfade aufweisen.

Vorzugsweise ist die erste Energieversorgungseinheit mit einer dauerhaften Energieversorgung eines Kraftfahrzeugs verbunden. Vorzugsweise ist die zweite Energieversorgungseinheit mit einer zeitweise unterbrochenen, insbesondere einer von einer Zündung des Kraftfahrzeugs abhängigen, Energieversorgung des Kraftfahrzeugs verbunden. Insbesondere weist das System einen Sensor auf, der eine Nichtverfügbarkeit der Energieversorgung erfasst. Vorzugsweise erkennt der Sensor, ob ein Motor des Kraftfahrzeugs läuft.

Des Weiteren wird vorgeschlagen, dass die erste Energieversorgungseinheit zumindest bei einer Versorgungsunterbrechung der zweiten Energieversorgungseinheit eine Energie zur Erfassung einer Position des Handwerkzeugakkus bereitstellt, wodurch der Bediener den Handwerkzeugakku auch während der Versorgungsunterbrechung vorteilhaft positionieren kann. Insbesondere kann der Handwerkzeugakku nach der Versorgungsunterbrechung zuverlässig direkt geladen werden, weil der Bediener eine Positionierung des Handwerkzeugakkus bereits überprüfen konnte.

Insbesondere soll unter einer "Versorgungsunterbrechung" ein Zustand verstanden werden, bei dem eine Energieversorgung der zweiten Energieversorgungseinheit keine Energie abgeben kann. Insbesondere stellt die Energieversorgung bei der Versorgungsunterbrechung der zweiten Energieversorgungseinheit keine Eingangsspannung bereit.

Unter der Wendung "eine Energie bereitstellen" soll insbesondere verstanden werden, dass die erste Energieversorgungseinheit eine Funktion mit Energie versorgt, wenn die zweite Energieversorgungseinheit auf Grund der Versorgungsunterbrechung keine Energie zur Versorgung der Funktion zur Verfügung stellen kann.

Insbesondere soll unter der Wendung "zur Erfassung einer Position des Handwerkzeugakkus" verstanden werden, dass die Handwerkzeugakkuladevorrichtung zumindest eine Ladeelektronik aufweist, die in zumindest einem Betriebszustand eine von einer Anordnung des Handwerkzeugakkus relativ zur Handwerkzeugakkuladevorrichtung abhängige Kenngröße ermittelt und vorzugsweise an einen Bediener ausgibt.

Vorzugsweise ermittelt die Ladeelektronik zumindest, ob der Handwerkzeugakku in einer zur induktiven Ladung erforderlichen Position angeordnet ist. Vorzugsweise erfasst die Ladeelektronik eine Kenngröße, die zumindest eine Information aufweist, die von einer Entfernung des Handwerkzeugakkus von der erforderlichen Position abhängig ist.

Ferner wird vorgeschlagen, dass die erste Energieversorgungseinheit zumindest bei einer Versorgungsunterbrechung der zweiten Energieversorgungseinheit eine Energie zur Ausgabe der Information des Ladevorgangs bereitstellt, wodurch dem Bediener vorteilhaft auch während der Versorgungsunterbrechung diese Information zur Verfügung steht. Unter der Wendung eine "Energie zur Ausgabe der Information des Ladevorgangs bereitstellt" soll insbesondere verstanden werden, dass die erste Energieversorgungseinheit während der Versorgungsunterbrechung eine Energie abgibt, mittels deren die Bedienerschnittstelle die Information des Ladevorgangs dem Bediener übermittelt.

Zudem wird vorgeschlagen, dass die erste Energieversorgungseinheit zumindest einen Energiespeicher aufweist, wodurch ein Betreiben der beiden Energieversorgungseinheiten mit einer Energieversorgung vorteilhaft möglich ist. Insbesondere soll unter einem "Energiespeicher" ein Akku, ein Kondensator und/oder ein anderer, dem Fachmann als sinnvoll erscheinender Speicher verstanden werden, der groß genug ist, die Erfassung einer Position des Handwerkzeugakkus und insbesondere die Ausgabe der Information des Ladevorgangs über einen Zeitraum von wenigstens einer Minute mit Energie zu versorgen. Alternativ oder zusätzlich könnte die Energieversorgungseinheit dazu vorgesehen sein, zumindest zeitweise eine Energie aus dem Handwerkzeugakku zu entnehmen.

Weiterhin wird vorgeschlagen, dass das System eine Separierungseinheit umfasst, die dazu vorgesehen ist, die Handwerkzeugakkuladevorrichtung und die Bedienerschnittstelle voneinander beabstandet angeordnet elektrisch zu verbinden, wodurch eine Überwachung der Position und eines Ladezustands des Handwerkzeugakkus an einem von dem Aufbewahrungsort verschiedenen Ort möglich ist. Insbesondere können die Handwerkzeugakkuladevorrichtung in einem Ladebereich eines Kraftfahrzeugs und die Bedienerschnittstelle in einem Führerhaus des Kraftfahrzeugs angeordnet sein, wodurch die Position und der Ladezustand während einer Fahrt insbesondere von dem Fahrer überwacht werden können.

Unter einer "Separierungseinheit" soll insbesondere eine Einheit verstanden werden, die dazu vorgesehen ist, zumindest eine Information von der Handwerkzeugakkuladevorrichtung zu der von der Handwerkzeugakkuladevorrichtung beabstandet angeordneten Bedienerschnittstelle zu übertragen. Vorzugsweise weist die Separierungseinheit ein die Handwerkzeugakkuladevorrichtung und die Bedienerschnittstelle verbindendes Kabel auf, das insbesondere länger als 1 m, vorteilhaft länger als 3 m ist. Alternativ und/oder zusätzlich könnte die Separierungseinheit eine drahtlose Datenübertragungsstrecke aufweisen, die zumindest für eine Überbrückung wenigstens dieser Distanz geeignet ist.

Insbesondere soll unter der Wendung "voneinander beabstandet angeordnet" verstanden werden, dass zwischen jedem Punkt der Handwerkzeugakkuladevorrichtung und jedem Punkt der Bedienerschnittstelle wenigstens eine Distanz von 1 m, vorteilhaft 3 m, liegt. Alternativ oder zusätzlich könnte das System eine Bedienerschnittstelle aufweisen, die in einer Nähe der Handwerkzeugakkuladevorrichtung, d. h. weniger als 1 m beabstandet, angeordnet ist. Unter "elektrisch verbinden" soll insbesondere zumindest eine Datenübertragung über einen elektrisch leitenden und/oder einen elektromagnetischen Pfad verstanden werden.

In einer vorteilhaften Ausbildung der Erfindung wird vorgeschlagen, dass die Bedienerschnittstelle dazu vorgesehen ist, mit mehreren Handwerkzeugakkuladevorrichtungen zu kommunizieren, wodurch ein flexibel erweiterbares System zur Verfügung gestellt werden kann. Insbesondere soll unter der Wendung "mit mehreren Handwerkzeugakkuladevorrichtungen kommunizieren" verstanden werden, dass die Bedienerschnittstelle mehrere Kommunikationsmittel aufweist, die dazu vorgesehen sind, mit jeweils einer Handwerkzeugakkuladevorrichtung zu kommunizieren. Vorzugsweise sind die Kommunikationsmittel zumindest teilweise einstückig ausgebildet, beispielsweise als Kommunikationsmittel eines Datenbusses, das dazu vorgesehen ist, mit mehreren Handwerkzeugakkuladevorrichtungen zu kommunizieren.

Ferner wird vorgeschlagen, dass die Handwerkzeugakkuladevorrichtung einen Kofferaufnahmebereich aufweist, der sich zumindest teilweise mit dem Akkuaufnahmebereich überschneidet, wodurch ein in einem Handwerkzeugkoffer angeordneter Handwerkzeugakku geladen werden kann. Unter einem "Kofferaufnahmebereich" soll insbesondere ein Bereich der Handwerkzeugakkuladevorrichtung verstanden werden, in dem ein Handwerkzeugkoffer des Systems zumindest bei einem Ladevorgang angeordnet ist. Vorzugsweise weist die Handwerkzeugakkuladevorrichtung zumindest eine Befestigungsvorrichtung zur Befestigung des Handwerkzeugkoffers in dem Kofferaufnahmebereich auf.

Vorzugsweise begrenzt ein Ladevorrichtungsgehäuse der Handwerkzeugakkuladevorrichtung den Kofferaufnahmebereich auf zumindest einer Seite. Insbesondere soll unter einem "Handwerkzeugkoffer" ein Koffer verstanden werden, der in einem geschlossenen Zustand einen Werkzeugaufnahmebereich stoßgeschützt, feuchtigkeitsgeschützt und/oder staubgeschützt begrenzt. Vorzugsweise ist der Handwerkzeugkoffer dazu vorgesehen, den Handwerkzeugakku in dem Akkuaufnahmebereich der Handwerkzeugakkuladevorrichtung anzuordnen und/oder vorteilhaft zu befestigen. Vorzugsweise begrenzt der Handwerkzeugkoffer den Werkzeugaufnahmebereich zumindest teilweise in Form eines Handwerkzeugakkus.

Bevorzugt weist der Handwerkzeugkoffer zumindest ein Positionierungs- und/oder Fixierungsmittel zur Positionierung und/oder Fixierung eines Handwerkzeugs, eines Handwerkzeugs mit einem angeschlossenen Handwerkzeugakku und/oder besonders bevorzugt eines Handwerkzeugakkus auf. Vorzugsweise ist der Handwerkzeugkoffer magnetisch und/oder vorteilhaft elektrisch passiv. Insbesondere weist der Handwerkzeugkoffer keine Elektrik auf. Alternativ oder zusätzlich könnte der Handwerkzeugkoffer eine Ladespule und/oder vorteilhaft einen Magnetfeldleiter aufweisen, der die Energie empfängt und drahtgebunden und/oder magnetisch an einen Handwerkzeugakku weiterleitet.

Vorzugsweise ist der Handwerkzeugkoffer entsprechend dem in der Druckschrift DE 10 2008 058 007 B3 vorgeschlagenen Handwerkzeugkoffer ausgebildet, weist jedoch einen Handwerkzeugaufnahmebereich und/oder einen Handwerkzeugakkuaufnahmebereich auf, der dazu vorgesehen ist, bei einem Ladevorgang einen induktiv ladbaren Handwerkzeugakku aufzunehmen. Unter "überschneiden" soll in diesem Zusammenhang insbesondere verstanden werden, dass der Akkuaufnahmebereich zumindest teilweise, vorzugsweise vollständig, in dem Kofferaufnahmebereich angeordnet ist.

Zudem wird vorgeschlagen, dass das System zumindest ein Kommunikationsmittel umfasst, das dazu vorgesehen ist, drahtlos zu kommunizieren, wodurch auf eine Datenleitung und insbesondere deren Verlegung verzichtet werden kann. Insbesondere soll unter einem "Kommunikationsmittel" ein Mittel verstanden werden, das dazu vorgesehen ist, Informationen zumindest zu übertragen und/oder vorzugsweise auszutauschen. Vorzugsweise weisen die Handwerkzeugakkuladevorrichtung und die Bedienerschnittstelle jeweils ein Kommunikationsmittel auf.

Unter der Wendung "drahtlos kommunizieren" soll insbesondere verstanden werden, dass das Kommunikationsmittel dazu vorgesehen ist, eine Information über einen vorteilhaft körperlosen Informationsträger, beispielsweise über Schall-, Licht- und/oder vorzugsweise Funkwellen, auszusenden. Vorzugsweise überträgt das Kommunikationsmittel das Signal durch zumindest einen elektrischen Isolator, der insbesondere zwischen einem Sender und einem Empfänger angeordnet ist, beispielsweise ein elektrisch unleitender Kunststoff und/oder Luft.

Vorzugsweise überträgt das Kommunikationsmittel die Information über eine Strecke von mehr als 50 % einer Gesamtstrecke der Kommunikation durch den Isolator. Insbesondere ist das Kommunikationsmittel dazu vorgesehen, über eine, dem Fachmann als sinnvoll erscheinende drahtlose Verbindung, vorzugsweise jedoch über ein Mobilfunknetz wie GSM, eine Bluetooth-Verbindung, eine ISM-Verbindung und/oder eine WLAN-Verbindung, zu kommunizieren.

Weiterhin wird vorgeschlagen, dass die Bedienerschnittstelle dazu vorgesehen ist, über ein Bord-Netz eines Kraftfahrzeugs mit der Handwerkzeugakkuladevorrichtung zu kommunizieren, wodurch eine besonders zuverlässige Kommunikation konstruktiv einfach erreicht werden kann. Unter einem "Bord-Netz eines Kraftfahrzeugs" soll insbesondere ein, dem Fachmann als sinnvoll erscheinendes Netz, vorzugsweise ein LIN-Bus, ein FlexRay-Bus und/oder CAN-Bus verstanden werden. Alternativ könnte die Bedienerschnittstelle über ein LAN und/oder über USB mit der Handwerkzeugakkuladevorrichtung kommunizieren.

### Zeichnung

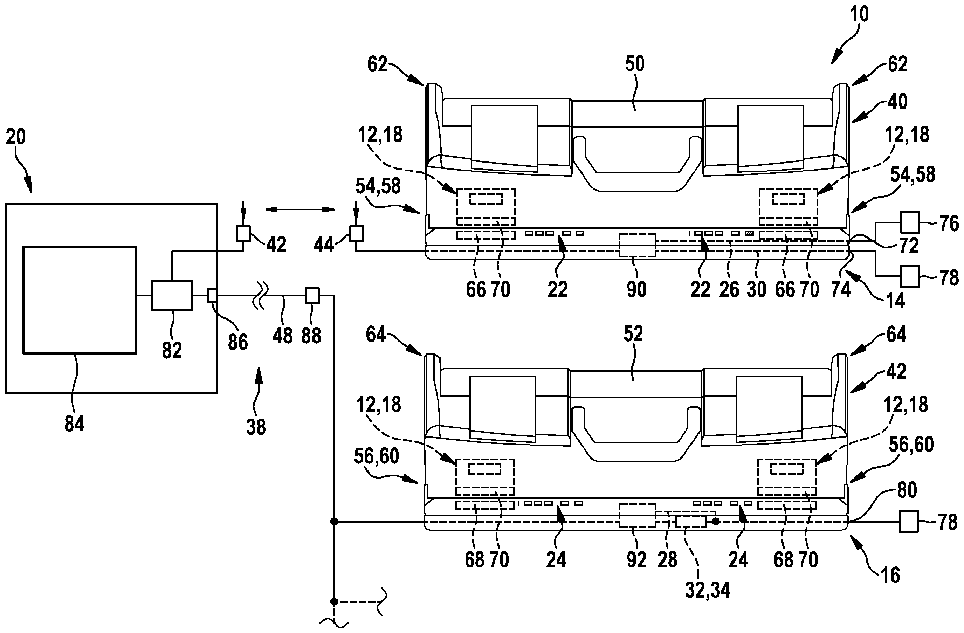

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

Die Figur zeigt ein System 10 mit vier Handwerkzeugakkus 12, einer ersten und einer zweiten Handwerkzeugakkuladevorrichtung 14, 16, einer ersten Bedienerschnittstelle 20, einer Separierungseinheit 38 und zwei Handwerkzeugkoffern 50, 52. Die Handwerkzeugakkuladevorrichtungen 14, 16 weisen Haltevorrichtungen 54, 56 auf, die jeweils einen der Handwerkzeugkoffer 50, 52 in einem Kofferaufnahmebereich 40, 42 der jeweiligen Handwerkzeugakkuladevorrichtung 14, 16 befestigen. Die Haltevorrichtungen 54, 56 verrasten die Handwerkzeugkoffer 50, 52. Die Handwerkzeugkoffer 50, 52 weisen erste Haltevorrichtungen 58, 60 auf, die in zumindest einem Betriebszustand mit den Haltevorrichtungen 54, 56 der Handwerkzeugakkuladevorrichtungen 14, 16 koppeln. Die Handwerkzeugkoffer 50, 52 weisen zweite Haltevorrichtungen 62, 64 auf, die entsprechend den Haltevorrichtungen 54, 56 der Handwerkzeugakkuladevorrichtungen 14, 16 ausgebildet sind. Somit sind die zweiten Haltevorrichtungen 62, 64 der Handwerkzeugkoffer 50, 52 dazu vorgesehen, jeweils mit einer ersten Haltevorrichtung 58, 60 eines anderen Handwerkzeugkoffers 50, 52 zu koppeln und einen Stapel zu bilden.

Die Handwerkzeugkoffer 50, 52 positionieren die Handwerkzeugakkus 12 bei einem Ladevorgang in Akkuaufnahmebereichen 18 der Handwerkzeugakkuladevorrichtungen 14, 16 in ihrem Inneren. Die Kofferaufnahmebereiche 40, 42 und die Akkuaufnahmebereiche 18 überschneiden sich somit teilweise. Die Handwerkzeugakkuladevorrichtungen 14, 16 weisen Ladespulen 66, 68 auf, die an die Akkuaufnahmebereiche 18 angrenzend angeordnet sind. Die Akkuaufnahmebereiche 18 nehmen die Handwerkzeugakkus 12 bei dem induktiven Ladevorgang auf. Die Ladespulen 66, 68 der Handwerkzeugakkuladevorrichtungen 14, 16 übertragen bei einem Ladevorgang eine Ladeenergie induktiv an Ladespulen 70 der Handwerkzeugakkus 12. Die Ladespulen 66, 68 der Handwerkzeugakkuladevorrichtungen 14, 16 übertragen die Ladeenergie durch eine Kofferwand des jeweiligen Handwerkzeugkoffers 50, 52 an die entsprechenden Handwerkzeugakkus 12.

Die Handwerkzeugakkuladevorrichtungen 14, 16 weisen jeweils zwei Bedienerschnittstellen 22, 24 auf, von denen eine bei einem Einbringen eines der Handwerkzeugakkus 12 in einen der Akkuaufnahmebereiche 18 eine Information über eine Position des Handwerkzeugakkus 12 relativ zu einer Position mit einer optimalen induktiven Kopplung zwischen den Ladespulen 66, 68, 70 ausgibt. Des Weiteren weisen die Handwerkzeugakkuladevorrichtungen 14, 16 jeweils einen Annäherungssensor auf, der eine Erfassung des Handwerkzeugakkus 12 und die Ausgabe der Information startet, zumindest wenn sich ein Bediener den Handwerkzeugakkuladevorrichtungen 14, 16 annähert. Wenn der Handwerkzeugakku 12 in dem Akkuaufnahmebereich 18 angeordnet ist, gibt die entsprechende Bedienerschnittstelle 22, 24 einen Ladezustand der Handwerkzeugakkus 12 aus. Bei dem Ladevorgang der Handwerkzeugakkus 12 gibt die Bedienerschnittstelle 22, 24 einen aktuellen Ladezustand des Ladevorgangs des dazugehörigen Handwerkzeugakkus 12 aus.

Die erste und die zweite Handwerkzeugakkuladevorrichtung 14, 16 weisen jeweils eine erste Energieversorgungseinheit 26, 28 und eine zweite Energieversorgungseinheit 30, 32 auf. Die ersten Energieversorgungseinheiten 26, 28 stellen bei einer Versorgungsunterbrechung der zweiten Energieversorgungseinheiten 30, 32 jeweils eine Energie zur Erfassung und Ausgabe einer Position und eines Ladezustands der Handwerkzeugakkus 12 bereit. Die zweiten Energieversorgungseinheiten 30, 32 stellen eine Energie bei dem Ladevorgang für den Ladevorgang der Handwerkzeugakkus 12 zur Verfügung.

Die erste Handwerkzeugakkuladevorrichtung 14 weist einen ersten Energieeingang 72 und einen von dem ersten Energieeingang 72 getrennten zweiten Energieeingang 74 auf. Eine erste Energieversorgung 76 ist über den ersten Energieeingang 72 mit der ersten Energieversorgungseinheit 26 verbunden. Die erste Energieversorgung 76 ist als eine dauerhafte Energieversorgung 76 eines nicht näher dargestellten Kraftfahrzeugs, in das das System 10 eingebaut ist, ausgebildet. Eine zweite Energieversorgung 78 ist über den zweiten Energieeingang 74 mit der zweiten Energieversorgungseinheit 30 verbunden. Die zweite Energieversorgung 78 ist als eine Energieversorgung 78 ausgebildet, die nur bei einer aktivierten Zündung und/oder bei einem laufenden Motor des Kraftfahrzeugs aktiv ist.

Die zweite Handwerkzeugakkuladevorrichtung 16 weist einen Energieeingang 80 auf, der mit beiden Energieversorgungseinheiten 28, 32 verbunden ist. Der Energieeingang 80 der zweiten Handwerkzeugakkuladevorrichtung 16 ist mit der zweiten Energieversorgung 78 verbunden. Die erste Energieversorgungseinheit 28 weist einen Energiespeicher 34 auf. Der Energiespeicher 34 puffert eine Energie zur Erfassung und Ausgabe einer Position und eines Ladezustands der Handwerkzeugakkus 12. Die zweite Energieversorgungseinheit 32 stellt bei einem Ladevorgang eine Energie direkt für den Ladevorgang zur Verfügung, wodurch ein hoher Wirkungsgrad erreicht werden kann. Alternativ könnte auch eine Energie für einen Ladevorgang über einen Puffer zur Verfügung gestellt werden und vorteilhaft ein Ladevorgang bei fehlender Energieversorgung von einer Ladeelektronik unterbrochen werden.

Die erste Bedienerschnittstelle 20 ist in einem Fahrerhaus des Kraftfahrzeugs angeordnet. Die Bedienerschnittstelle 20 umfasst eine Recheneinheit 82 und ein Display 84. Das Display 84 ist als berührungsempfindliches Display 84 ausgebildet. Das Display 84 gibt Informationen über Positionen und Ladezustände der Handwerkzeugakkus 12 aus. Das Display 84 informiert beispielsweise einen Fahrer des Kraftfahrzeugs, wenn einer der Handwerkzeugakkus 12 während der Fahrt eine für den Ladevorgang geeignete Position verlässt.

Die Separierungseinheit 38 weist vier Kommunikationsmittel 44, 46, 86, 88 auf. Die Kommunikationsmittel 44, 46, 86, 88 sind als Nachrüstmodule ausgebildet. Alternativ könnten Kommunikationsmittel in eine Bedienerschnittstelle oder eine Handwerkzeugakkuladevorrichtung integriert sein. Ein erstes der Kommunikationsmittel 44 ist mit der Recheneinheit 82 der ersten Bedienerschnittstelle 20 über eine, dem Fachmann als sinnvoll erscheinende Schnittstelle verbunden. Ein zweites der Kommunikationsmittel 46 ist mit einer Recheneinheit 90 der ersten Handwerkzeugakkuladevorrichtung 14 verbunden. Ein drittes der Kommunikationsmittel 86 ist mit der Recheneinheit 82 der ersten Bedienerschnittstelle 20 verbunden. Ein viertes der Kommunikationsmittel 88 ist mit einer Recheneinheit 92 der zweiten Handwerkzeugakkuladevorrichtung 16 verbunden. Somit verbindet die Separierungseinheit 38 die Handwerkzeugakkuladevorrichtungen 14, 16 und die erste Bedienerschnittstelle 20 elektrisch und voneinander beabstandet angeordnet. Die Bedienerschnittstelle 20 kommuniziert bei einem Betrieb über die Separierungseinheit 38 mit der ersten und der zweiten Handwerkzeugakkuladevorrichtung 14, 16.

Das erste und das zweite Kommunikationsmittel 44, 46 sind dazu vorgesehen, drahtlos miteinander zu kommunizieren. Das erste und das zweite Kommunikationsmittel 44, 46 kommunizieren über eine Funkverbindung, und zwar eine ISM-Funkverbindung. Sie übertragen Informationen zwischen der Recheneinheit 82 der ersten Bedienerschnittstelle 20 und der Recheneinheit 90 der ersten Handwerkzeugakkuladevorrichtung 14. Das dritte und das vierte Kommunikationsmittel 86, 88 sind dazu vorgesehen, über ein Bord-Netz 48 des Kraftfahrzeugs mit der Handwerkzeugakkuladevorrichtung 16 zu kommunizieren. Sie übertragen Informationen zwischen der Recheneinheit 82 der ersten Bedienerschnittstelle 20 und der Recheneinheit 92 der zweiten Handwerkzeugakkuladevorrichtung 16. Das dritte Kommunikationsmittel 86 ist in die erste Bedienerschnittstelle 20 integriert.

## Patentansprüche

1. System mit zumindest einem Handwerkzeugakku (12), zumindest einer Handwerkzeugakkuladevorrichtung (14, 16) und zumindest einer Bedienerschnittstelle (20, 22, 24),
wobei die zumindest eine Handwerkzeugakkuladevorrichtung (14, 16) zumindest einen Akkuaufnahmebereich (18) zur Aufnahme des zumindest einen Handwerkzeugakkus (12) bei einem induktiven Ladevorgang aufweist,
und die zumindest eine Bedienerschnittstelle (20, 22, 24) dazu vorgesehen ist, zumindest eine Information über eine Position und einen Ladezustand des zumindest einen Handwerkzeugakkus (12) auszugeben,
**dadurch gekennzeichnet, dass**
zwischen jedem Punkt der zumindest einen Handwerkzeugakkuladevorrichtung (14, 16) und jedem Punkt der zumindest einen Bedienerschnittstelle (20) wenigstens eine Distanz von einem Meter liegt,
wobei die zumindest eine Handwerkzeugakkuladevorrichtung (14, 16) und die zumindest eine Bedienerschnittstelle (20) durch eine Separierungseinheit (38) derart elektrisch verbunden sind, dass die zumindest eine Bedienerschnittstelle (20) bei einem Betrieb über Kommunikationsmittel (44, 46, 86, 88) der Separierungseinheit (38) mit der zumindest einen Handwerkzeugakkuladevorrichtung (14, 16) kommuniziert.

2. System nach Anspruch 1, **gekennzeichnet durch** eine erste Energieversorgungseinheit (26, 28) und eine zweite Energieversorgungseinheit (30, 32).

3. System nach Anspruch 2, **dadurch gekennzeichnet, dass** die erste Energieversorgungseinheit (26, 28) zumindest bei einer Versorgungsunterbrechung der zweiten Energieversorgungseinheit (30, 32) eine Energie zur Erfassung der Position des Handwerkzeugakkus (12) bereitstellt.

4. System zumindest nach Anspruch 2, **dadurch gekennzeichnet, dass** die erste Energieversorgungseinheit (26, 28) zumindest bei einer Versorgungsunterbrechung der zweiten Energieversorgungseinheit (30, 32) eine Energie zur Ausgabe der Information des Ladevorgangs bereitstellt.

5. System zumindest nach Anspruch 2, **dadurch gekennzeichnet, dass** die erste Energieversorgungseinheit (26, 28) zumindest einen Energiespeicher (34) aufweist.

6. System nach einem der vorhergehenden Ansprüche, **dadurch gekennzeichnet, dass** die Bedienerschnittstelle (20) dazu vorgesehen ist, mit mehreren Handwerkzeugakkuladevorrichtungen (14, 16) zu kommunizieren.

7. System nach einem der vorhergehenden Ansprüche, **dadurch gekennzeichnet, dass** die Handwerkzeugakkuladevorrichtung (14, 16) einen Kofferaufnahmebereich (40, 42) aufweist, in dem zumindest ein Handwerkzeugkoffer (50, 52) zumindest bei einem Ladevorgang angeordnet ist,
wobei sich der Kofferaufnahmebereich (40, 42) zumindest teilweise mit dem Akkuaufnahmebereich (18) überschneidet.

8. System nach einem der vorhergehenden Ansprüche, **dadurch gekennzeichnet, dass** die Kommunikationsmittel (44, 46) drahtlos kommunizieren.

9. System nach einem der vorhergehenden Ansprüche, **dadurch gekennzeichnet, dass** die Bedienerschnittstelle (20) über ein Bord-Netz (48) eines Kraftfahrzeugs mit der Handwerkzeugakkuladevorrichtung (16) kommuniziert.

## Claims

1. System comprising at least one handheld tool rechargeable battery (12), at least one handheld tool rechargeable battery charging device (14, 16) and at least one operator interface (20, 22, 24) wherein the at least one handheld tool rechargeable battery charging device (14, 16) has at least one rechargeable battery receiving region (18) for receiving the at least one handheld tool rechargeable battery (12) during an inductive charging process,
and the at least one operator interface (20, 22, 24) is provided to output at least one item of information relating to a position and a state of charge of the at least one handheld tool rechargeable battery (12),
**characterized in that**
there is at least a distance of one metre between each point of the at least one handheld tool rechargeable battery charging device (14, 16) and each point of the at least one operator interface (20),
wherein the at least one handheld tool rechargeable battery charging device (14, 16) and the at least one operator interface (20) are electrically connected by a separating unit (38) in such a way that the at least one operator interface (20) communicates with the at least one handheld tool rechargeable battery charging device (14, 16) via communication means (44, 46, 86, 88) of the separating unit (38) during operation.

2. System according to Claim 1, **characterized by** a first energy supply unit (26, 28) and a second energy supply unit (30, 32).

3. System according to Claim 2, **characterized in that** the first energy supply unit (26, 28) provides energy for detecting the position of the handheld tool rechargeable battery (12) at least in the event of an interruption in supply in the second energy supply unit (30, 32).

4. System at least according to Claim 2, **characterized in that** the first energy supply unit (26, 28) provides energy for outputting the information about the charging process at least in the event of an interruption in supply in the second energy supply unit (30, 32).

5. System at least according to Claim 2, **characterized in that** the first energy supply unit (26, 28) has at least one energy store (34).

6. System according to one of the preceding claims, **characterized in that** the operator interface (20) is provided to communicate with a plurality of handheld tool rechargeable battery charging devices (14, 16).

7. System according to one of the preceding claims, **characterized in that** the handheld tool rechargeable battery charging device (14, 16) has a case receiving region (40, 42) in which at least one handheld tool case (50, 52) is arranged at least during a charging process, wherein the case receiving region (40, 42) overlaps at least partially with the rechargeable battery receiving region (18).

8. System according to one of the preceding claims, **characterized in that** the communication means (44, 46) communicate wirelessly.

9. System according to one of the preceding claims, **characterized in that** the operator interface (20) communicates with the handheld tool rechargeable battery charging device (16) via an on-board electrical system (48) of a vehicle.

## Revendications

1. Système comprenant au moins une batterie d'outil à main (12), au moins un dispositif de charge de batterie d'outil à main (14, 16) et au moins une interface opérateur (20, 22, 24),
dans lequel l'au moins un dispositif de charge de batterie d'outil à main (14, 16) comporte au moins une zone de réception de batterie (18) destinée à recevoir l'au moins une batterie d'outil à main (12) pendant un processus de charge par induction,
et l'au moins une interface opérateur (20, 22, 24) est conçue pour fournir au moins une information concernant une position et un état de charge de l'au moins une batterie d'outil à main (12),
**caractérisé en ce que** chaque point de l'au moins un dispositif de charge de batterie d'outil à main (14, 16) et chaque point de l'au moins une interface opérateur (20) se situent à une distance d'au moins un mètre l'un de l'autre,
dans lequel l'au moins un dispositif de charge de batterie d'outil à main (14, 16) et l'au moins une interface opérateur (20) sont reliés électriquement par une unité de séparation (38) de manière à ce qu'en fonctionnement, l'au moins une interface opérateur (20) communique avec l'au moins un dispositif de charge de batterie d'outil à main (14, 16) par l'intermédiaire de moyens de communication (44, 46, 86, 88) de l'unité de séparation (38).

2. Système selon la revendication 1, **caractérisé par** une première unité d'alimentation en énergie (26, 28) et une deuxième unité d'alimentation en énergie (30, 32).

3. Système selon la revendication 2, **caractérisé en ce que** la première unité d'alimentation en énergie (26, 28) fournit une énergie permettant de détecter la position de la batterie d'outil à main (12) au moins lors d'une interruption de l'alimentation de la deuxième unité d'alimentation en énergie (30, 32).

4. Système selon au moins la revendication 2, **caractérisé en ce qu'**au moins lors d'une interruption de l'alimentation, la première unité d'alimentation en énergie (26, 28) fournit à la deuxième unité d'alimentation en énergie (30, 32) une énergie permettant de délivrer l'information du processus de charge.

5. Système selon au moins la revendication 2, **caractérisé en ce que** la première unité d'alimentation en énergie (26, 28) comporte au moins un accumulateur d'énergie (34).

6. Système selon l'une des revendications précédentes, **caractérisé en ce que** l'interface opérateur (20) est conçue pour communiquer avec une pluralité de dispositifs de charge de batterie d'outil à main (14, 16).

7. Système selon l'une des revendications précédentes, **caractérisé en ce que** le dispositif de charge de batterie d'outil à main (14, 16) comporte une zone de réception de coffret (40, 42) dans laquelle est disposé au moins un coffret à outil (50, 52) au moins lors d'un processus de charge,
dans lequel la région de réception de coffret (40, 42) chevauche au moins en partie la zone de réception de batterie (18).

8. Système selon l'une des revendications précédentes, **caractérisé en ce que** les moyens de communication (44, 46) communiquent sans fil.

9. Système selon l'une des revendications précédentes, **caractérisé en ce que** l'interface opérateur (20) communique avec le dispositif de charge de batterie d'outil à main (16) par l'intermédiaire d'un réseau embarqué (48) d'un véhicule automobile.
